(19) Europäisches Patentamt
European Patent Office
Office européen des brevets

(11) **EP 4 148 682 A1**

(12) **EUROPEAN PATENT APPLICATION**

(43) Date of publication:
**15.03.2023 Bulletin 2023/11**

(21) Application number: **22186854.0**

(22) Date of filing: **26.07.2022**

(51) International Patent Classification (IPC):
**G06T 13/40** (2011.01)    **G06T 7/00** (2006.01)

(52) Cooperative Patent Classification (CPC):
**G06T 13/40; G06T 7/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.09.2021  FI 20215945**

(71) Applicant: **Nokia Technologies Oy
02610 Espoo (FI)**

(72) Inventors:
- **FASOGBON, Peter Oluwanisola
Tampere (FI)**
- **AKSU, Emre Baris
Tampere (FI)**

(74) Representative: **Nokia EPO representatives
Nokia Technologies Oy
Karakaari 7
02610 Espoo (FI)**

(54) **A METHOD, AN APPARATUS AND A COMPUTER PROGRAM PRODUCT FOR COMPUTER GRAPHICS**

(57)    The embodiments relate to a method comprising regressing a source mesh to a corresponding source three-dimensional skeletal-joint in a kinematic hierarchy; extracting target skeletal joint from a depth sensor to be represented by the kinematic hierarchy; extracting joint parameters from the target skeletal-joint by an optimization iteration scheme; and updating joint parameters in the source skeletal-joint according to the extracted joint parameters to produce accurate estimated joint parameters for skeletal animation and/or pointcloud animation. The embodiments also relate to the technical equipment for implementing the method.

Fig. 2

**Description**

<u>Technical Field</u>

The present solution generally relates to computer graphics, in particular to computer generated animation.

<u>Background</u>

Computer generated animation is a field of computer graphics, where moving images are created by using computers. Computer animation may be based on three-dimensional (3D) computer graphics. In order to represent movement of an object, an image comprising the object is displayed on the computer screen, and replaced by a new image that is similar to the previous image, but shifted slightly. For 3D animations, objects are built on the computer monitors, and 3D figures are rigged with virtual skeleton.

EXtended reality (XR) is a concept that covers all computer-altered reality areas such as Augmented Reality (AR), Mixed Reality (MR) and Virtual Reality (VR). A concept of using 3D pointcloud in realtime XR conversation is gaining lots of momentum and resource of popularity lately. This is mostly due to sudden increase in Augmented Reality (AR) deployment capabilities, Virtual Reality (VR) headmounted displays available to the consumer market, as well as accessibility and affordability of these devices for Mixed Reality (MR) experiences.

<u>Summary</u>

The scope of protection sought for various embodiments of the invention is set out by the independent claims. The embodiments and features, if any, described in this specification that do not fall under the scope of the independent claims are to be interpreted as examples useful for understanding various embodiments of the invention.

Various aspects include a method, an apparatus and a computer readable medium comprising a computer program stored therein, which are characterized by what is stated in the independent claims. Various embodiments are disclosed in the dependent claims.

According to a first aspect, there is provided an apparatus comprising means for regressing a source mesh to a corresponding source three-dimensional skeletal-joint in a kinematic hierarchy; means for extracting target skeletal joint from a depth sensor to be represented by a kinematic hierarchy; means for extracting joint parameters from the target skeletal-joint by an optimization iteration scheme; and means for updating joint parameters in the source skeletal-joint according to the extracted joint parameters to produce accurate estimated joint parameters for skeletal animation and/or pointcloud animation.

According to a second aspect, there is provided a method comprising regressing a source mesh to a corresponding source three-dimensional skeletal-joint in a kinematic hierarchy; extracting target skeletal joint from a depth sensor to be represented by a kinematic hierarchy; extracting joint parameters from the target skeletal-joint by an optimization iteration scheme; and updating joint parameters in the source skeletal-joint according to the extracted joint parameters to produce accurate estimated joint parameters for skeletal animation and/or pointcloud animation.

According to a third aspect, there is provided an apparatus comprising at least one processor, memory including computer program code, the memory and the computer program code configured to, with the at least one processor, cause the apparatus to perform at least the following: regress a source mesh to a corresponding source three-dimensional skeletal-joint in a kinematic hierarchy; extract target skeletal joint from a depth sensor to be represented by a kinematic hierarchy; extract joint parameters from the target skeletal-joint by an optimization iteration scheme; and update joint parameters in the source skeletal-joint according to the extracted joint parameters to produce accurate estimated joint parameters for skeletal animation and/or pointcloud animation.

According to a fourth aspect, there is provided a computer program product comprising computer program code configured to, when executed on at least one processor, cause an apparatus or a system to: regress a source mesh to a corresponding source three-dimensional skeletal-joint in a kinematic hierarchy; extract target skeletal joint from a depth sensor to be represented by a kinematic hierarchy; extract joint parameters from the target skeletal-joint by an optimization iteration scheme; and update joint parameters in the source skeletal-joint according to the extracted joint parameters to produce accurate estimated joint parameters for skeletal animation and/or pointcloud animation.

According to an embodiment, joint parameters comprises of scale and joint angle.

According to an embodiment, an orientation of a three-dimensional character is determined by the estimated joint parameters.

According to an embodiment, vertices are bound to source skeleton, and the bound vertices are deformed to deformed vertices.

According to an embodiment, a three-dimensional joint coordinate position is determined by a kinematic mapping function of a joint angle and scale.

According to an embodiment, the joint angle and scale is estimated with an inverse kinematic mapping function of a coordinate position.

According to an embodiment, joint parameters update is derived from an inverse of Jacobian matrix taking into account a reprojection error.

According to an embodiment, the computer program product is embodied on a non-transitory computer readable medium.

Description of the Drawings

In the following, various embodiments will be described in more detail with reference to the appended drawings, in which

Fig. 1        shows a system according to an example embodiment for a source 3D mesh using the target 3D skeletal-joint;

Fig. 2        shows a scaled constrained skeletal animation according to an example embodiment;

Fig. 3a       shows an illustration of forward kinematic mapping between a source skeletal-joint and target skeletal joint;

Fig. 3b       shows an example of axis-angle determination;

Fig. 4        shows an illustration of transformation of vertex V to vertex v using projective dynamics;

Figs. 5, 6    show examples of experimental demonstration using target skeletal-joint of a performance actor;

Fig. 7        is a flowchart illustrating a method according to an embodiment; and

Fig. 8        shows an example of an apparatus.

Description of Example Embodiments

The present solution is targeted to computer animation, and in particular to real-time pointcloud animation using scale constrained inverse kinematics.

The following description and drawings are illustrative and are not to be construed as unnecessarily limiting. The specific details are provided for a thorough understanding of the disclosure. However, in certain instances, well-known or conventional details are not described in order to avoid obscuring the description. References to one or an embodiment in the present disclosure can be, but not necessarily are, reference to the same embodiment and such references mean at least one of the embodiments.

Reference in this specification to "one embodiment" or "an embodiment" means that a particular feature, structure, or characteristic described in connection with the embodiment is included in at least one embodiment of the disclosure.

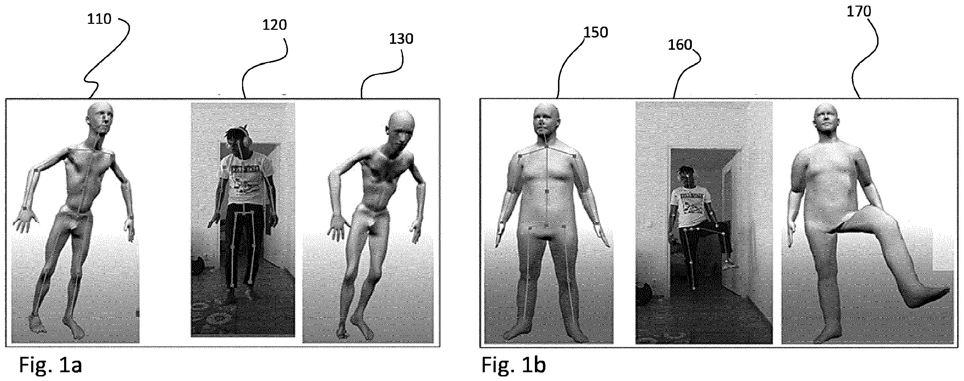

Computer animation is widely used in many applications, such as movie making, game development, and virtual reality with the aim of producing visually desirable character animation results. The focus in the present disclosure is on how a source three-dimensional (3D) mesh/pointclouds can be animated using a given 3D target skeletal-joint. Figures 1a and 1b show example of a present embodiments. Figures 1a, 1b show a proposed animation system for a source 3D mesh using the target 3D skeletal-joint extracted from Microsoft Kinect Azure. In the given examples, a 3D source mesh is animated using the target skeletal-joint located on the image plane. Thus, in the present solution a relation "skeletal deformation" is established between the source skeletal-joint 110, 150 and target skeletal-joint 120, 160. The target 3D skeletal-joint 120, 160 is readily available from RGB-D sensors such as Microsoft Kinect V1, V2, Azure and Intel Realsense. The method according to various embodiments is invariance to scale which has been constrained as part of an optimization process, and thus invariance to bone length between source and target entities. As a result, the skeletal bone length and mesh shapes are preserved during animation.

The present embodiments are targeted to provide a working implementation (use case example) for 3D mesh animation. One of the aims is to incorporate this demonstration as part of 3GPP and MPEG standards under XR conversational scene description, whereby 3D skeletal joints are being signalled and sent at every time from one caller to the other instead of directly sending animated pointcloud at every time.

XR (eXtended Reality) is a concept that covers all computer-altered reality areas such as Augmented Reality (AR), Mixed Reality (MR), and Virtual Reality (VR). In this description term "avatar" refers to 3D (three-dimensional) pointcloud that can be an avatar-like pointcloud of human but also high level detail representation of human and also 3D mesh representation. For example, real-time 3D Avatar conversation enables a user to transmit a virtual representation of themselves to a receiver's virtual environment or as AR/MR in their physical environment enabling deep immersive experience. This kind of experience enables interaction up to the facial expression, hand gestures, and live commands to impact the receivers virtual space during live conversation. Much like how audio and video calls have provided a greater deal of realism and immersion to human communications, a 3D avatar would allow for substantially more engaging person-to-person interaction in a virtual environment. Body language can much more closely approach the ability it has in the real world to convey meaning, as movements can be displayed and interpreted more accurately, and virtual or mixed reality environments would create an illusion of a shared physical location. As a result, these makes 3D avatar vital for future conversational system and opening up the possibility of simulating experiences that have not yet been able to be recreated with current technologies and methods, due to the importance of spatial factors that are not able to be captured by 2D (two-dimensional) video.

Several examples of ISO standards that can support the present embodiments under MPEG SC24 are ISO/IEC 18039:2019: Mixed and augmented reality (MAR) reference model; ISO/IEC 18040:2019 Live actor and entity representation in mixed and augmented reality; (MAR)ISO/IEC 18520:2019 Benchmarking of vision-based spatial registration and tracking methods for mixed and augmented reality; (MAR)ISO/IEC 19774-1:2019 Part 1: Humanoid animation (HAnim) architecture (part 1); ISO/IEC 19774-2:2019 Part 2: Part 2: Humanoid animation (HAnim) motion data animation; ISO/IEC 23488 CD: Object/Environmental Representation for Image-based Rendering in Virtual/Mixed and Augmented Reality; ISO/IEC 23884 DTS Material Property and Parameter Representation for Model based Haptic Simulation of Objects in Virtual, Mixed and Augmented Reality (VR, MAR); and ISO/IEC 18023-1 and AMD: Functional specification ISO/IEC 18023-2: transmission formats.

Keypoint is a term referring to human skeletal representation. Keypoint defines a hierarchy connection of parent-child pair of human body joints. By picking a joint denoted, for example as *"r_shoulder"*, its immediate child *"r_elbow"* can be retrieved, as well as its grandchildren *"r_wrist"* and this cycle goes on until the whole family tree is retrieved. This straightforward representation of joints as keypoints hierarchy allow easy retrieval of information regarding a joint which is useful for various animation framework such as popular skeletal animation based on forward and inverse kinematics. In conclusion, a keypoint can be referred to as a joint with hierarchy definitions while joint is simply a joint without hierarchy formation.

Skeletal animation or "Rigging" is a technique in computer animation in which a character (or other articulated object) is represented in two parts: a surface representation used to draw the character (called the mesh or skin) and a hierarchical set of interconnected parts (called joints or nodes, and collectively forming the skeleton or rig). In addition, the character has virtual armature used to animate (pose and keyframe) the mesh. While this technique is often used to animate humans and other organic figures, it can be used to control the deformation of any object - such as a door, a spoon, a machine, or a galaxy. When the animated object is more general than, for example, a humanoid character, the set of "joints" may not be hierarchical or interconnected, but simply represent a higher-level description of the motion of the part of mesh it is influencing. In the present disclosure, skeletal node and skeletal joint are to be considered equal.

The prerequisites for skeletal animation for a 3D mesh are the presence of:

- An initial pose (also referred to as "bind pose") of the skeleton and its joints interconnectivity. (The *bind pose* is the pose that the skeleton has when the skin is bind, and therefore it is the initial (or rest) pose of the character. When character's skeleton is posed after skinning, the skeleton's actions deform the skin. The only pose that does not cause deformations to the skin is the bind pose)
- For each mesh vertex, a selection of connected joints with respective weighting for animation

Such a set of data together with the 3D mesh is also called skinned mesh:

Skin:

- Array of joints with inverse bind pose matrix (IBM, per joint or shared). (The inverse bind pose matrix "undoes" any transformation that has already been applied to the model in its bind pose, to avoid applying the bind pose transformations twice when applying joint transformations).
- Joints are nodes which can consist of child-parent hierarchy and further transformations.

Joints (also known as skeleton nodes or joint nodes):

- Each vertex of a primitive may list indices of joints that should have an influence on the vertex position during the skinning process.
- Technically a vertex can depend on all joints of the skeleton, but in practice it is much more likely to depend on a small subset of joints that are spatially closest.

Weights (floating point data):

- Each vertex in a skinned mesh lists per joint how strongly it is affected by the joint.
- The sum of weights might need to equal 1.0, which could be exploited.

A 3D mesh must be properly rigged and skinned in order to create seamless animation. This process can be time consuming and requires deep knowledge of appropriate software. The fundamental techniques to accomplish this task in the literature are based on the process of "rigging" and "skinning". Rigging process comprises binding each vertex of the input 3D mesh to one or more bones of the underlying 3D skeletal-joint. These vertices are then deformed through a skinning process, that involves the use of appropriate skinning weights which determine how each bone influences the animated mesh. A certain vertex may be associated to one or more skeletal bones, through one or more skinning weights. Also, a certain bone may be associated to more than one vertex.

The approach of rigging-skinning requires additional effort to create an animated human character, with huge effort done in rigging the model to provide appropriate control mechanism and deformation behaviour. The rigging process do not explicitly/implicitly resolve the scale issue that arise from difference in local and global size, between the source and target skeletal-joint pairs. As a result, subsequent skinning process assume good bone orientations are available for accurate deformation. This is not necessarily true and can go wildly off especially under non-constrained conversational application where the subject can move uncontrollable. If scale problem is not resolved, the eventual bones orientation will be wildly off and badly affecting the vertices deformation. In addition, the skinning process itself depends hugely on extracting proper skinning weights which tends to vary for different character. As the skinning weight might require adjustment and intervention every time, this makes it non-practical for real XR conversational system. In addition, sending skinning weight as part of signalled standardized animation metadata introduces additional complexity and, thus needs to be avoided for standardized XR conversational system.

A good low bandwidth XR conversation system is desired to be easy and should have a generic metadata structure, which should allow easy deployment to various standard related bodies. In addition, the system should be able to animate a source mesh with huge structural/size difference to the target skeletal-joint, such as animate a "chunky man" using a target skeletal-joint from a "little girl" and vice versa. One of the way to tackle the animation scale problem will be to use a neural network based approach, but might not reach real-time expectations.

Thus, the animation scale problem can be formulated under skeletal based animation by implicitly incorporating scale resolved in the optimization process. The scale resolved through proposed optimization allows getting accurate joint parameters needed to deform the mesh as animation. First, the proposed optimization scheme is used to extract accurate joint rotation parameters from target skeletal-joint. This results in accurate deformation of sources skeletal-joint preserving its shape and length, thanks to the scale resolved. Afterwards, attached vertices bound to the source skeletal-joint are deformed using projective dynamics. The use of projective dynamics according to the present disclosure incorporate physical properties as part of the deformation, and thus there is no need to estimate skinning weights.

One of the rigging skinning methods for animation is known as skeletal animation and/or Linear Blend Skinning (LBS). Most of the skeletal animation methods somewhat assume that skeletal orientations are accurate and scale information has been resolved (scale resolved). In addition, some of the methods are not targeted for real-time conversation applications but offline processing suitable for game engines or media playbacks.

Linear Blend Skinning is one of the most popular techniques for character animation. LBS relies on a good rigging process where an underlying bone structure is placed inside the source mesh, followed by assigning weights to those mesh vertices in relation to the corresponding bones. Some works under rigging-skinning can provide intuitive skinning result, but highly dependent on prerequisite rigging process, and also accurate bone orientation. In addition, most of these methods require manual intervention in the rigging process to produce realistic characters.

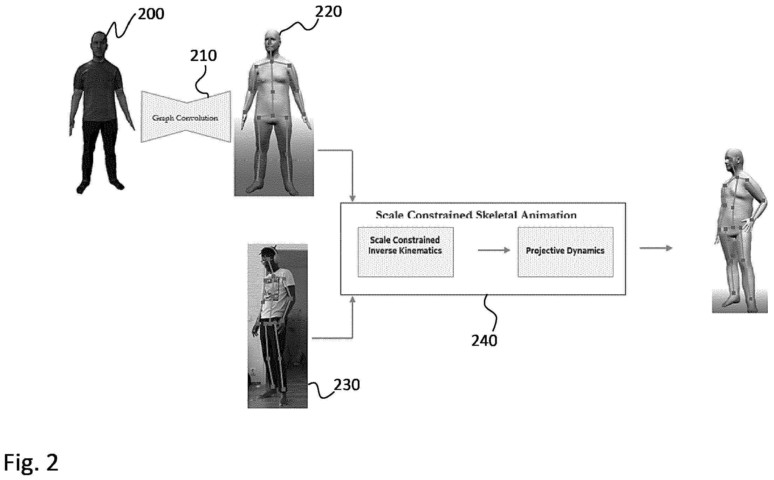

Figure 2 illustrates an example of a system according to the present embodiments. In the first stage, a graph convolution neural network 210 may be directly used to regress a source mesh 200 to corresponding source three-dimensional (3D) skeletal-joint 220. The outcome produces a hierarchy tree representation of the source skeletal-joints, which can be in various formats such as BVH (BioVision Motion Capture) motion capture format. This representation forms a kinematic chain (parent-child-grandchildren relation) that is needed for subsequent Forward Kinematics (FK) process. In the second stage, target 3D skeletal-joints 230 may be directly extracted from a depth sensor, such as Microsoft Kinect azure and/or Intel-RGB-D sensors, for example. As the extracted target 3D skeletal-joints may be too noisy, a temporal smooth filter may be applied to improve the outcome. From the filtered outcome, a hierarchy tree representation can be set up that is semantically consistent with that of the source skeletal-joint.

The present embodiments are targeted to the "scale constrained skeletal animation" 240 framework, the example of which is shown in Figure 2. This framework accepts both the source skeletal-joint 220 and target skeletal-joint 230 as input. It is worth noticing that these inputs do not necessarily have to be the same scale or size, thus not from the same person. The framework 240 contains two main steps which are (i) scaled constrained Inverse Kinematics and (ii) projective dynamics. The scale constrained Inverse Kinematics (IK) estimate accurate joint parameters with scale resolved (optimal rotation and scale). This eventually allows the scale information to be resolved during forward kinematic process performed on the kinematic chain. The projective dynamics step takes the estimated rotation as input to deform the mesh vertices.

The formulation according to present embodiments is inspired by forward and inverse kinematics idea used in robotics. Given joint parameters, the orientation of a 3D character can be calculated directly using multiple applications of trigonometric formulas, a process known as forward kinematics. Mathematically, forward kinematics problem can be described in equation (1):

$$x = \Pi(q) \qquad \text{(Equation 1)}$$

where $x$ can be seen as a 3D joint coordinate position which is influenced by joint angle $q$. $\Pi$ is the forward kinematic mapping function which is non-linear.

Scale $s$ is proposed to be incorporated into the forward kinematic equation (1). The forward kinematic equation with scale resolve is thus

$$x = \Pi(q, s) \qquad \text{(Equation 2)}$$

The inverse kinematic is the inverse of the forward kinematic mapping function:

$$q, s = \Pi^{-1}(x) \qquad \text{(Equation 3)}$$

From equation (3), the aim of the present embodiments is to be able to estimate both the scale $s$ and joint angle $q$ (i.e., rotation) given known coordinate position $x$. In summary, given source skeletal-joint position, a joint parameter being formed on joint angles $q$, and scale $s$, needs to be estimated to reach target skeletal-joint position.

The joint parameters and scale are estimated, then refined as part of IK process in equation (3). At each optimization iteration, the forward kinematic will be used to resolve the scale while also rotating the source to target skeletal-joint. This produces accurate estimated parameters (scale, angles) for skeletal animation and pointcloud animation. The method according to present embodiments incorporate the scale estimation as part of the inverse optimization process in equation (3).

The features of the present embodiments are discussed next in more detailed manner.

Skeletal Animation using Constrained IK

The problem comes down to using inverse kinematic approach to estimate the transformation $\Pi$ in equation (3). Given initial source joint parameters (rotation, scale) at iterative step $t$, then the updated joint parameter at step $t + 1$ is then:

$$\theta^{t+1} = \theta^t + \Delta\theta^t, \text{ where } \Delta\theta^t = \alpha\text{J*e} \qquad \text{(Equation 4)}$$

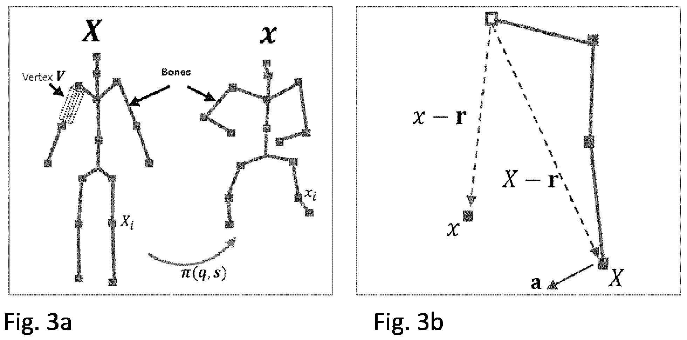

where $(q, s) \in \theta$, $\Delta\theta$ is the step update parameters, $\alpha$ is a gain parameter, J* is an inverse of the geometric Jacobian J matrix and e is the reprojection error $\|\pi(X) - x\|$, which is to be minimized. As shown in Figure 3, $\pi(X)$ is the reprojection of source joints to target joints using estimated joint parameters.

Equation (4) is an orthogonal problem and can be solved using Singular Value Decomposition. However, in order to solve equation (4), one needs to create the inverse of the first-order Jacobian matrix **J*** at first. The Jacobian matrix can be computed analytically which is faster and effective since the current animation task is a small dimension problem involving few number of joints.

All joints are assumed in world coordinate in Figure 3, where $i = 1,.., n$ joints, $x$ is the target skeletal-joint and *X* is the source skeletal-joint. The best quartenion unit length axis rotation is extracted in equation (5), where r is the position of joint pivot in world space.

$$a = \frac{(X-r) \times (x-r)}{\|(X-r) \times (x-r)\|}$$
(Equation 5)

$j = 1,.., m$ is defined as number of parameters to optimize, and $k = 1,.., K$ blocks such that each block correspond to total number of DOF of a joint (rotation and scale). The DOF of a joint may be 3 for rotation around x,y,z axis, and 3 for scale around x,y,z axis respectively. It is to be noticed that in some cases, some joints may only move over x,y axis or z alone which thus changes the size of the DOF. Finally, the Jacobian matrix may be represented as:

$$J = \left[ \frac{\partial e}{\partial \theta_{jk}}, ..., \frac{\partial e}{\partial \theta_{mK}} \right]$$
(Equation 6)

An additional parameter $\psi$ is proposed to act as a regularizer on the derivative pertaining to scale in the Jacobian matrix so that $\frac{\partial e}{\partial \theta_j} = a_j \times (x - r_j)$ becomes $\frac{\partial e}{\partial \theta_j} = \psi( \alpha_j \times (x - r_j))$ in the implementation of the present embodiments. The $\psi$ act as a stiffness to regularize to best solution for the optimization, by scaling the derivative larger while preserving vector direction. In the present embodiments, the total number of $\psi$ may be 2 and positioned in the Jacobian matrix so that the first value regularizes scale entries $\frac{\partial e}{\partial \theta_j}$ that influences the upper-body parts and the second value regularizes the Jacobian scale entries $\frac{\partial e}{\partial \theta_j}$ that influences the lower body parts. $\psi$ is chosen in the beginning of the optimization step *t* using the bone length difference between source and target joints, and made fixed throughout the iteration. Indeed, the proposed solution compensate with a smaller value for $\Delta\theta$ for all scale related gradient, therefore making it act stiff.

According to another embodiment, $\psi$ can be make adaptively to change during the iterative steps rather than being fixed. Its value can be directly tied to the derivative to smooth its transition to optimum. It is to be noticed that the total number of $\psi$ can be more than two (e.g., have one for each joint or bone relation). However, this will increase the size of Jacobian matrix's DOF and thus increase computational complexity and time.

The optimization in equation (4) may be solved with damped Jacobian pseudo-inverse using SVD. The result produces appropriate joint rotation parameter compatible for forward kinematic process, thanks to the scale resolve. The rotation needed is extracted for the subsequent projective dynamics.

Projective Dynamic

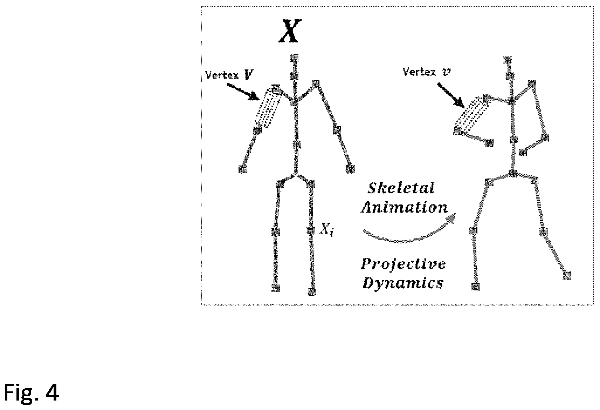

Using the forward kinematic with the estimated joint parameters according to present embodiments, the skeletal animation for bone transformation that preserve the scale and size can be effected. The task of projective dynamics is to deform vertices *V* bound to source skeleton bone to deformed vertices *v* with bone movement. An example of this is shown in Figure 4. One of the major constraints is to avoid the need to use skinning weights as done in popular state of art LBS. Projective dynamics method exploit dynamic physical properties of human bodies by preserving some form of constraint energy.

The bones and joints may be represented as tetrahedral elements $\epsilon$. Thereafter, the vertices may be shrank-wrapped to their corresponding bones as in the Figure 4. The overall energy of the entire body is the sum of all elemental energies show in equation (7):

$$(V, R) = \sum_\epsilon (F_\epsilon, R_\epsilon)$$
(Equation 7)

where $F_\epsilon$ is a deformation gradient which is constant in each element and is a linear function of the deformed location *V* of the mesh vertices, where each element's rotation matrix $R_\epsilon$.

The derfomable system evolves as to satisfy a force equilibrium condition, or equivalently in pursuit of a minimizer for the energy from which the conventional discrete corotated energy can be recovered for the entire mesh by minimizing rotations over all elements. Therefore, the quasistatic evolution can be seen as a minimization of the modified energy jointly over both independent parameters $V$ and $R$:

$$\min_{V} E(V) = \min_{(V,R)} E(V, R) \qquad \text{(Equation 8)}$$

Projective Dynamics chooses to conduct the minimization of equation (8) by alternating both local and global optimization steps until convergence:

- **Local Step** make $V$ as constant, and minimize $E$ over all $R$, where our estimated angles $q \in R$. This step is highly parallelizable for implementation since $R$ is independent for all elements $\in$ constituting bones and joints. The solution to the individual minimization of $R_{\in}$ is obtained via the Orthogonal decomposition of deformation gradient $F_{\in}$ using SVD. The deformation gradient $F$ calculation may be done by using Finite Element paradigm.

- **Global Step** make $R$ as constant and minimize $E$ over all $V$. The minimization associated with the global step is handled by an application of a Newton-Raphson procedure, which produces an iterative update sequence. Finally, deformed vertices $v$ is extracted.

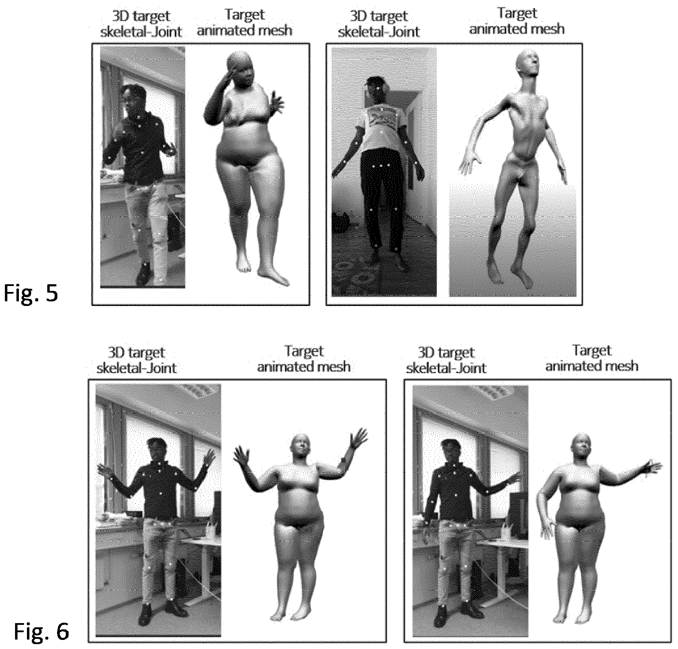

The proposed approach has been tested on Desktop PC with Intel CoreTM i7-6700 CPU (3.40 GHz), 32GB RAM. Microsoft Kinect 2.0 has been used as the source of 3D target skeletal-joint. 3D source mesh used in the experiments are from 3D mesh generated with photogrammetry methods. The implementation reach about 60fps on CPU implementation, which can easily be extended to GPU devices which will lead to higher frame rate. Some visual results are shown in Figures 5 and 6. The system according to present embodiments enables avoiding the time consuming and cumbersome steps of rigging-skinning, while resolving scale issue, and avoid skinning weights calculation. As a result, the present approach is more suitable for real-time XR conversational system.

Additional embodiment

In an implementation according to present embodiments, the vertices have been shrank-wrapped to bone and joint elements which create an indexing to particular bones/joint elements. This indexing information can further be processed to manipulate collision and simulate interpenetration effect of the 3D mesh as future embodiments.

Throughout the present disclosure, the focus has been on 17 skeletal-joints representing full human skeletal hierarchy. In other embodiments, unlimited number of skeletal-joints can be used with the proposed system. One can represent facial features, fingers, and toes as skeletal-joints. These can have further use in applications such as facial expression and tracking, hand gesture manipulations and gaze estimation.

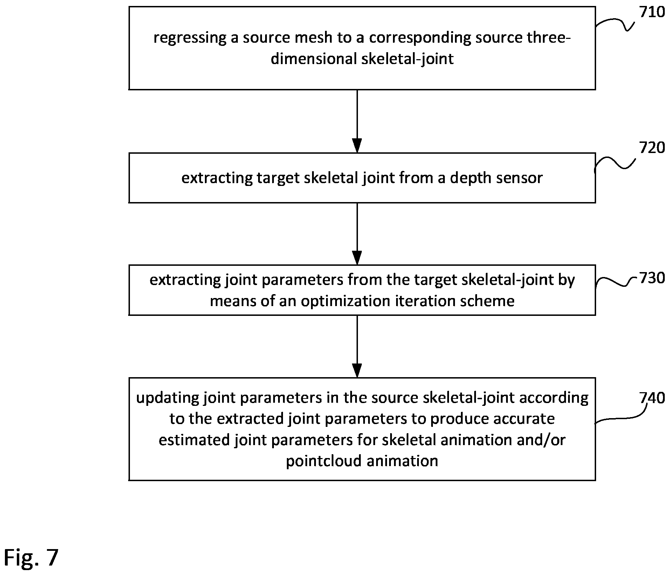

The method according to an embodiment is shown in Figure 7. The method generally comprises regressing 710 a source mesh to a corresponding source three-dimensional skeletal-joint in a kinematic hierarchy; extracting 720 target skeletal joint from a depth sensor to be represented by a kinematic hierarchy; extracting 730 joint parameters from the target skeletal-joint by an optimization iteration scheme; and updating 740 joint parameters in the source skeletal-joint according to the extracted joint parameters to produce accurate estimated joint parameters for skeletal animation and/or pointcloud animation. Each of the steps can be implemented by a respective module of a computer system.

An apparatus according to an embodiment comprises means for regressing a source mesh to a corresponding source three-dimensional skeletal-joint in a kinematic hierarchy; means for extracting target skeletal joint from a depth sensor to be represented by a kinematic hierarchy; means for extracting joint parameters from the target skeletal-joint by an optimization iteration scheme; and means for updating joint parameters in the source skeletal-joint according to the extracted joint parameters to produce accurate estimated joint parameters for skeletal animation and/or pointcloud animation. The means comprises at least one processor, and a memory including a computer program code, wherein the processor may further comprise processor circuitry. The memory and the computer program code are configured to, with the at least one processor, cause the apparatus to perform the method of Figure 7 according to various embodiments.

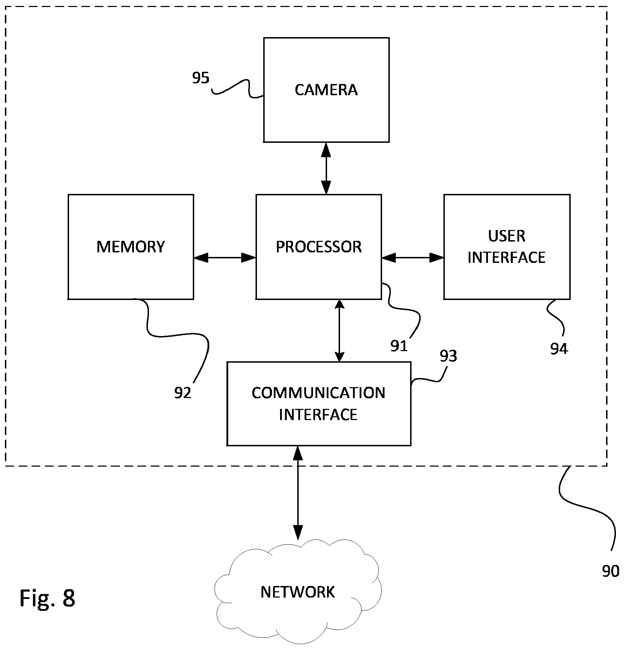

An apparatus according to an embodiment is illustrated in Figure 8. The apparatus is a user equipment for the purposes of the present embodiments. The apparatus 90 comprises a main processing unit 91, a memory 92, a user interface 94, a communication interface 93. The apparatus according to an embodiment, shown in Figure 10, may also comprise a camera module 95. Alternatively, the apparatus may be configured to receive image and/or video data from an external camera device over a communication network. The memory 92 stores data including computer program code in the apparatus 90. The computer program code is configured to implement the method according various embodiments by means of various computer modules. The camera module 95 or the communication interface 93 receives data, in the form of images or video stream, to be processed by the processor 91. The communication interface 93 forwards processed data, i.e. the image file, for example to a display of another device, such a virtual reality headset. When the apparatus 90 is a video source comprising the camera module 95, user inputs may be received from the user interface.

The various embodiments may provide advantages. For example, the proposed approach is generic, easy ported to standards use case, suitable for XR conversation, computationally less expensive, fully automatic with no need for intervention. Indeed, the use of popular IK technique as base ensures easy deployments on mobile devices, and servers since major software and engines have IK frameworks.

The various embodiments can be implemented with the help of computer program code that resides in a memory and causes the relevant apparatuses to carry out the method. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of various embodiments.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as, defined in the appended claims.

## Claims

1. An apparatus comprising:

   - means for regressing a source mesh to a corresponding source three-dimensional skeletal-joint in a kinematic hierarchy;
   - means for extracting target skeletal-joint from a sensor to be represented by the kinematic hierarchy;
   - means for extracting joint parameters from the target skeletal-joint by an optimization iteration scheme; and
   - means for updating joint parameters in the source skeletal-joint according to the extracted joint parameters to produce estimated joint parameters for skeletal animation and/or pointcloud animation.

2. The apparatus according to claim 1, wherein joint parameters comprises of scale and joint angle.

3. The apparatus according to claim 1 or 2, further comprising means for determining an orientation of a three-dimensional character by the estimated joint parameters.

4. The apparatus according to any of the claims 1 to 3, further comprising means for binding vertices to source skeleton, and means for deforming the bound vertices to deformed vertices.

5. The apparatus according to any of the claims 2 to 4, further comprising means for determining a three-dimensional joint coordinate position by a kinematic mapping function of a joint angle and scale.

6. The apparatus according to claim 5, further comprising means for estimating the joint angle and scale with an inverse kinematic mapping function of a coordinate position.

7. The apparatus according to any of the claims 1 to 6, wherein joint parameters update is derived from an inverse of Jacobian matrix taking into account a reprojection error.

8. The apparatus according to any of the claims 1 to 7, further comprising at least one processor, and a memory including a computer program code.

9. A method, comprising:

 - regressing a source mesh to a corresponding source three-dimensional skeletal-joint in a kinematic hierarchy;
 - extracting target skeletal-joint from a sensor to be represented by the kinematic hierarchy;
 - extracting joint parameters from the target skeletal-joint by an optimization iteration scheme; and
 - updating joint parameters in the source skeletal-joint according to the extracted joint parameters to produce estimated joint parameters for skeletal animation and/or pointcloud animation.

10. The method according to claim 9, wherein joint parameters comprises of scale and joint angle.

11. The method according to claim 9 or 10, further comprising determining an orientation of a three-dimensional character by using the estimated joint parameters.

12. The method according to any of the claims 9 to 11, further comprising binding vertices to source skeleton, and deforming the bound vertices to deformed vertices.

13. The method according to any of the claims 10 to 12, further comprising determining a three-dimensional joint coordinate position by a kinematic mapping function of a joint angle and scale.

14. The method according to claim 13, further comprising estimating the joint angle and scale with an inverse kinematic mapping function of a coordinate position.

15. The method according to any of the claims 9 to 14, wherein joint parameters update is derived from an inverse of Jacobian matrix taking into account a reprojection error.

170

160

150

Fig. 1b

130

120

110

Fig. 1a

Scale Constrained Skeletal Animation

Scale Constrained Inverse Kinematics

Projective Dynamics

240

220

230

210

Graph Convolution

200

Fig. 2

Fig. 3b

Fig. 3a

Fig. 4

Fig. 5

Fig. 6

EP 4 148 682 A1

```
┌─────────────────────────────────────────────┐
│  regressing a source mesh to a corresponding │      710
│     source three-dimensional skeletal-joint  │
└─────────────────────────────────────────────┘
                      │
                      ▼
┌─────────────────────────────────────────────┐
│   extracting target skeletal joint from a    │      720
│                depth sensor                  │
└─────────────────────────────────────────────┘
                      │
                      ▼
┌─────────────────────────────────────────────┐
│  extracting joint parameters from the target │      730
│  skeletal-joint by means of an optimization  │
│              iteration scheme                │
└─────────────────────────────────────────────┘
                      │
                      ▼
┌─────────────────────────────────────────────┐
│ updating joint parameters in the source      │      740
│ skeletal-joint according to the extracted    │
│ joint parameters to produce accurate         │
│ estimated joint parameters for skeletal      │
│ animation and/or pointcloud animation        │
└─────────────────────────────────────────────┘
```

Fig. 7

Fig. 8

Europäisches
Patentamt

European
Patent Office

Office européen
des brevets

# EUROPEAN SEARCH REPORT

Application Number

EP 22 18 6854

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/019517 A1 (CORAZZA STEFANO [US] ET AL) 26 January 2012 (2012-01-26)<br>* figures 1, 5A-6 *<br>* paragraph [0003] – paragraph [0008] *<br>* paragraph [0015] – paragraph [0019] *<br>* paragraph [0024] *<br>* paragraph [0037] – paragraph [0039] *<br>* paragraph [0047] – paragraph [0049] *<br>* paragraphs [0055], [0061] *<br>----- | 1-15 | INV.<br>G06T13/40<br>G06T7/00 |
| X | US 2021/150806 A1 (GULER RIZA ALP [GB] ET AL) 20 May 2021 (2021-05-20)<br>* figures 1, 5, 7-9, 11 *<br>* paragraph [0017] – paragraph [0032] *<br>* paragraphs [0042], [0064], [0065] *<br>* paragraph [0105] – paragraph [0126] *<br>----- | 1-15 | |
| X | CHA YOUNG-WOON ET AL: "Towards Fully Mobile 3D Face, Body, and Environment Capture Using Only Head-worn Cameras",<br>IEEE TRANSACTIONS ON VISUALIZATION AND COMPUTER GRAPHICS, IEEE, USA,<br>vol. 24, no. 11,<br>1 November 2018 (2018-11-01), pages 2993-3004, XP011693723,<br>ISSN: 1077-2626, DOI: 10.1109/TVCG.2018.2868527<br>[retrieved on 2018-10-29]<br>* figures 4-6, 12, 13, 15 *<br>* abstract *<br>* chapters: 3 "System Overview"-6 "Video-based Body Pose Reconstruction"; page 2995 – page 2998 *<br>----- | 1-15 | TECHNICAL FIELDS SEARCHED (IPC)<br><br>G06T |

-/--

The present search report has been drawn up for all claims

| Place of search | Date of completion of the search | Examiner |
|---|---|---|
| Berlin | 12 January 2023 | Höller, Helmut |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 22 18 6854

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/259855 A1 (RLT IP LTD [GB]) 30 December 2020 (2020-12-30) * figures 1, 3 * * paragraph [0001] - paragraph [0003] * * paragraph [0014] - paragraph [0017] * * paragraph [0027] - paragraph [0029] * * paragraph [0041] - paragraph [0045] * * paragraph [0050] * ----- | 1-15 | |
| A | WANG SEN ET AL: "A Generative Human-Robot Motion Retargeting Approach Using a Single RGBD Sensor", IEEE ACCESS, vol. 7, 29 April 2019 (2019-04-29), pages 51499-51512, XP011721775, DOI: 10.1109/ACCESS.2019.2911883 [retrieved on 2019-04-25] * the whole document * ----- | 1-15 | |

TECHNICAL FIELDS SEARCHED (IPC)

The present search report has been drawn up for all claims

| Place of search | Date of completion of the search | Examiner |
|---|---|---|
| Berlin | 12 January 2023 | Höller, Helmut |

## ANNEX TO THE EUROPEAN SEARCH REPORT
## ON EUROPEAN PATENT APPLICATION NO.

EP 22 18 6854

12-01-2023

| Patent document cited in search report | | Publication date | Patent family member(s) | | Publication date |
|---|---|---|---|---|---|
| US 2012019517 | A1 | 26-01-2012 | US | 2012019517 A1 | 26-01-2012 |
| | | | US | 2015145859 A1 | 28-05-2015 |
| | | | WO | 2012012753 A1 | 26-01-2012 |
| US 2021150806 | A1 | 20-05-2021 | CN | 114981844 A | 30-08-2022 |
| | | | EP | 4058989 A1 | 21-09-2022 |
| | | | KR | 20220100920 A | 18-07-2022 |
| | | | US | 2021150806 A1 | 20-05-2021 |
| | | | WO | 2021094537 A1 | 20-05-2021 |
| WO 2020259855 | A1 | 30-12-2020 | US | 2022165012 A1 | 26-05-2022 |
| | | | WO | 2020259855 A1 | 30-12-2020 |

For more details about this annex : see Official Journal of the European Patent Office, No. 12/82